# EUROPÄISCHE PATENTSCHRIFT

(11) **EP 1 272 412 B1**
(45) Veröffentlichungstag und Bekanntmachung des Hinweises auf die Patenterteilung: **11.10.2006**
(21) Anmeldenummer: 01927824.1
(22) Anmeldetag: 28.03.2001
(51) Int. Cl.: B65G 53/28, A47L 15/42, F04F 1/02

(54) **VERFAHREN ZUR WIEDERHOLTEN FÖRDERUNG VON REINIGUNGSFLÜSSIGKEIT**
METHOD FOR REPEATEDLY CONVEYING RINSING FLUID
PROCÉDÉ DE TRANSPORT RÉPETÉ D'UN FLUIDE DE RINÇAGE

(30) Priorität: 06.04.2000 DE 10017241
(43) Veröffentlichungstag der Anmeldung: 08.01.2003
(73) Patentinhaber: BSH Bosch und Siemens Hausgeräte GmbH, 81739 München (DE)
(72) Erfinder: DEDEGIL, Yavuz, 76133 Karlsruhe (DE); WEBER, Manfred, 76185 Karlsruhe (DE); EIERMANN, Rüdiger, 89428 Syrgenstein (DE); NANNT, Hans-Peter, 89547 Dettingen (DE)
(86) Internationale Anmeldenummer: PCT/EP2001/003535
(87) Internationale Veröffentlichungsnummer: WO 2001/076991

(56) Entgegenhaltungen:
- WO-A-89/11431
- GB-A- 2 011 547
- GB-A- 2 267 315
- US-A- 2 400 651

## Beschreibung

Die Erfindung betrifft ein Verfahren zur wiederholten Förderung von Reinigungsflüssigkeit aus einer in einer Geschirrspülmaschine angeordneten Ablaufwanne, in der sich die von zu reinigendem Gut zurücklaufende Reinigungsflüssigkeit sammelt und zu einer Sprühvorrichtung befördert wird.

Üblicherweise werden fließfähige Stoffe, wie z. B. Flüssigkeiten, feinkörnige Schüttgüter oder Gemische aus Feststoffpartikeln mit Flüssigkeiten oder Gasen, mittels verschiedenster Verfahren transportiert, unter anderem durch Kreiselpumpen, Kolbenpumpen oder Membranpumpen etc..

Beim Einsatz von Kreiselpumpen tritt durch die Zentrifugalwirkung eine Entmischung von Gasen bzw. Feststoffpartikeln auf, wodurch die Fördermenge und der Wirkungsgrad der Pumpe beeinträchtigt werden.

Bei üblichen Pumpverfahren, z. B. mit gewöhnlichen Pumpen, muß z. B. eine Flüssigkeit unter einem hydrostatischen Druck aus einem Vorlagebehälter in die Pumpe einfließen. Der aktive, bewegte Teil der Pumpe, sei es das Laufrad, ein Kolben oder eine Membrane erzeugt einen Unterdruck und saugt die Flüssigkeit in die Pumpe ein. Dieser Unterdruck wird durch den Zulauf der Flüssigkeit begrenzt. Wenn der hydrostatische Druck auf der Saugseite nicht ausreicht, eine ausreichende Menge an Flüssigkeit in die Pumpe einzudrücken und den oben genannten Unterdruck zu begrenzen, kann der sich am Saugstutzen einstellende Absolutdruck unter den Dampfdruck der Flüssigkeit sinken, was zur Folge hat, daß die Flüssigkeit verdampft und nunmehr Dampf, anstelle oder neben der Flüssigkeit, in die Pumpe gelangt. Dies hat zur Folge, daß die Förderleistung auf einen Bruchteil der vorgesehenen Fördermenge absinkt. Ferner stellt sich bei diesem - Kavitation genannten - Vorgang eine übermäßige Geräuschentwicklung und eine Schädigung der Pumpe ein, die von der Kondensation der Dampfblasen hervorgerufen wird.

Da sich der Dampfdruck bei höheren Temperaturen und beim Vorhandensein von Feststoffpartikeln, sogenannten Keimen, erhöht, d. h. in die Nähe des Atmosphärendrucks verschoben wird, treten solche Erscheinungen beim Pumpen von warmen und verschmutzten Flüssigkeiten, wie dies z. B. bei der Geschirrspülmaschine Bosch S9FT1B der Fall ist, besonders stark und häufig auf, was zu den oben beschriebenen schweren Störungen des Betriebes führen kann.
Die Geschirrspülmaschinen Bosch S9FT1B weist eine Ablaufwanne auf, wo sich die von einem zu reinigenden Gut ablaufende Reinigungsflüssigkeit ansammelt. Die Reinigungsflüssigkeit wird mittels einer Pumpe aus der Ablaufwanne abgepumpt und zu einer als Sprüharm ausgebildete Sprühvorrichtung weiterbefördert. Die Sprüharme verteilen die Reinigungsflüssigkeit in einen Behandlungsraum der Geschirrspülmaschine und die von dem zu reinigenden Gut und Seitenwänden des Behandlungsraums ablaufende Reinigungsflüssigkeit sammelt sich wieder in der Ablaufwanne, wo diese wieder von der Pumpe angesaugt wird. Dieser sich wiederholende Vorgang des Förderns von Reinigungsflüssigkeit wird als Umwälzen bezeichnete und wird während des Betriebes der Geschirrspülmaschine mehrmals durchgeführt.

Zur Vermeidung dieser Nachteile, wird versucht, wie oben schon beschrieben, die Flüssigkeit unter einem eigenen, ausreichenden hydrostatischen Druck, z. B. aus einem Vorlagebehälter, in die Pumpe einfließen zu lassen. Hierzu ist auf der Saugseite der Pumpe, z. B. in einem Vorlagebehälter, eine Mindesthöhe der Flüssigkeit, die sogenannte NPSH (Net Positive Suction Head), einzuhalten, wodurch der notwendige hydrostatische Druck entstehen kann. Diese - üblicherweise Zulaufhöhe genannte - Mindesthöhe der Flüssigkeit kann allerdings nicht immer gewährleistet werden, weil dies z. B. räumlich nicht möglich ist oder weil eine dafür benötigte Vorlage einer zusätzlichen Masse an Flüssigkeit unerwünscht ist.

Der Erfindung liegt daher die Aufgabe zugrunde, ein Verfahren zur Förderung von Reinigungsflüssigkeit zu schaffen, zu dessen Anwendung keine besonderen Zulaufvoraussetzungen eingehalten werden müssen.

Diese Aufgabe wird erfindungsgemäß dadurch gelöst, dass die Reinigungsflüssigkeit durch ein gasförmiges Fördermedium mit einem Druck beaufschlagt wird, der zwischen zwei Druckniveaus abwechselnd so verändert wird, dass bei einem niedrigen Druckniveau die Reinigungsflüssigkeit nachfließt und durch Anlegen des höheren Druckniveaus in die gewünschte Förderrichtung gefördert wird.

Durch das Anlegen des niedrigen Druckes kann Reinigungsflüssigkeit trotz niedriger Zulaufhöhe in ausreichender Menge angesaugt werden. Durch die folgende Beaufschlagung mit höherem Druck erfolgt die Förderung der Reinigungsflüssigkeit zwangsweise durch Verdrängung.

Nach einer bevorzugten Ausführungsform der Erfindung wird die Reinigungsflüssigkeit durch das gasförmige Fördermedium mit einem Druck beaufschlagt wird, der zwischen zwei Druckniveaus abwechselnd so verändert wird, dass bei einem niedrigen Druckniveau, bei dem ein Unterdruck herrscht, die Reinigungsflüssigkeit angesaugt und durch Anlegen des höheren Druckniveaus, bei dem ein Überdruck herrscht, in die gewünschte Förderrichtung gefördert wird.
Da das gasförmige Fördermedium zum Verdichten auch angesaugt werden muß, wird mit dieser Maßnahme, dieser ohnehin vorhandene Unterdruck auch zur Förderung der Reinigungsflüssigkeit verwendet, insbesondere zur Beschleunigung des Nachfließens einer neuen, zu fördernden Menge von Reinigungsflüssigkeit.

Vorzugsweise ist das gasförmige Fördermedium Luft.

Vorteilhafterweise ist die Reinigungsflüssigkeit aus Gasen, Flüssigkeiten und/oder Gemischen derselben ausgebildet.

Die Erfindung wird nachstehend anhand den in der Zeichnung dargestellten Ausführungsbeispielen erläutert. Es zeigen
- Fig. 1: eine schematische Darstellung eines ersten Ausführungsbeispiel,
- Fig. 2: eine schematische Darstellung eines zweiten Ausführungsbeispiel,
- Fig. 3: eine schematische Darstellung eines dritten Ausführungsbeispiel,
- Fig. 4: eine schematische Darstellung einer Haushalt-Geschirrspülmaschine mit einer Vorrichtung zur Durchführung des erfindungsgemäßen Verfahren und
- Fig. 5: den zeitlichen Verlauf eines Sprühimpules.

In der nachfolgenden Figurenbeschreibung werden gleiche Teile mit gleichen Bezugszeichen benannt.

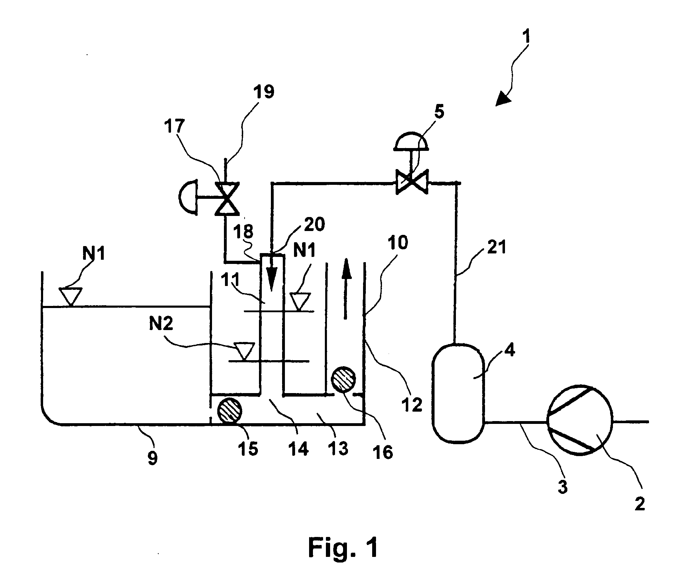

In den in den Fig. 1, 2 und 3 dargestellten Ausführungsbeispielen wird das erfindungsgemäße Verfahren zur Förderung von Reinigungsflüssigkeit an einem Verfahren zur Förderung von Flüssigkeiten gezeigt und beschrieben.

Eine Vorrichtung 1, 1', 1" zur Förderung von Flüssigkeiten in den drei gezeigten und beschriebenen Ausführungsbeispielen weist eine Anordnung 10, 10', 10" auf, in der die Flüssigkeit durch ein unter Druck stehendes gasförmiges Fördermedium beaufschlagt wird, wobei in den drei gezeigten und beschriebenen Ausführungsbeispielen die Flüssigkeit in der Anordnung 10, 10', 10" durch das gasförmige Fördermedium mit einem Druck beaufschlagt wird, der zwischen zwei Druckniveaus abwechselnd so verändert wird, daß bei einem niedrigen Druckniveau die Flüssigkeit nachfließt und durch Anlegen des höheren Druckniveaus in die gewünschte Förderrichtung gefördert wird. Durch die Beaufschlagung mit einem unter Druck stehenden gasförmigen Fördermedium ist es möglich eine Flüssigkeit weitgehend ohne bewegte mechanische Aggregate zu fördern. Die Vorrichtung benötigt keine technisch aufwendigen Zulaufbedingungen. In der Praxis hat sich gezeigt, daß eine derartige Vorrichtung keine Schwierigkeiten aufweist. Das gasförmige Fördermedium wird in den gezeigten Ausführungsbeispielen mittels eines Verdichters 2 unter Druck gestellt. In Strömungsrichtung des gasförmigen Fördermediums nach dem Verdichter 2, das heißt an einem Druckausgang 3 des Verdichters 2, ist ein Druckbehälter 4 angeschlossen, in den das gasförmige Fördermedium eingeleitet und bevorratet wird.

Weiterhin weist die Anordnung 10, 10', 10" in den drei gezeigten und beschriebenen Ausführungsbeispielen einen mit einem Behälter 9 leitend verbundenen Druckraum 11 auf. In den Druckraum 11 wird das gasförmige Fördermedium, gesteuert durch ein Ventil 5, eingeleitet. Dieses Ventil 5 zur Steuerung der Einleitung des gasförmigen Fördermediums in den Druckraum 11 ist in den drei gezeigten und beschriebenen Ausführungsbeispielen in einer Verbindungsleitung 21 zwischen dem Druckbehälter 4 und einem Eintritt 20 des gasförmigen Fördermediums in den Druckraum 11 angeordnet. Mit dem Druckraum 11 und dem Behälter 9 ist eine Ableitung 12 leitend verbunden. Wie aus den Fig. 1 bis 3 gut erkennbar ist, ist bei den drei gezeigten und beschriebenen Ausführungsbeispielen eine Leitung 13 von dem Behälter 9 bis zur Ableitung 12 fortgesetzt, die eine Abzweigung 14 zu dem Druckraum 11 aufweist. Zwischen dem Behälter 9 und dem Druckraum 11 ist bei den drei gezeigten und beschriebenen Ausführungsbeispielen ein Ventil 15 zum Öffnen und Schließen der Verbindung zwischen dem Behälter 9 und dem Druckraum 11 angeordnet, das, in den drei gezeigten und beschriebenen Ausführungsbeispielen, ein Rückschlagventil mit einem kugel- oder kegelförmigen Schließkörper ist, das einen Flüssigkeitsauslaß aus dem Behälter 9 bei Auftreten einer gegen den Behälter 9 gerichteten Strömung verschließt. Zwischen dem Druckraum 11 und der Ableitung 12 ist bei den drei gezeigten und beschriebenen Ausführungsbeispielen ein Ventil 16 zum Öffnen und Schließen der Ableitung 12 angeordnet, das, in den drei gezeigten und beschriebenen Ausführungsbeispielen, ein Rückschlagventil mit einem kugel- oder kegelförmigen Schließkörper ist, das die Ableitung 12 bei Auftreten einer gegen den Behälter 9 oder gegen den Druckraum 11 gerichteten Strömung verschließt. Der Druckraum 11 weist einen weiteren mit einem Ventil 17 gesteuerten Eingang 18 auf, an den eine Entlüftungsleitung 19 angeschlossen ist. Den drei gezeigten und beschriebenen Ausführungsbeispielen ist weiterhin gemeinsam, daß der Eintritt 20 des gasförmigen Fördermediums in den Druckraum 11 in Gebrauchslage, d.h. aus frontaler Sicht auf die Figuren 1 bis 4, oben und der Eintritt der Leitung 13, d. h. die Abzweigung 14, unten angeordnet ist.

Die Förderung von Flüssigkeiten wird in dem in Fig. 1 gezeigten Ausführungsbeispiel wie folgt ausgeführt:

In der in Fig. 1 gezeigten Anordnung 10 wird die Flüssigkeit in dem Druckraum 11 durch das gasförmige Fördermedium mit einem Druck beaufschlagt, der zwischen zwei Druckniveaus abwechselnd so verändert wird, daß bei einem niedrigen Druckniveau die Flüssigkeit nachfließt und durch Anlegen des höheren Druckniveaus in die gewünschte Förderrichtung gefördert wird.

Die Ventile 5, 16 und 17 sind anfänglich geschlossen. Die Flüssigkeit erstreckt sich aufgrund der leitenden Verbindung zwischen dem Behälter 9 und dem Druckraum 11, wobei in diesem in Fig. 1 dargestellten Ausführungsbeispiel die Verbindung mit dem Behälter 9 unter dessen Flüssigkeitsniveau N1 angeordnet ist, in beiden Behältern 9 und 11 bis zu dem Flüssigkeitsniveau N1. Durch Öffnen des Ventils 5 wird das unter einem Überdruck stehende gasförmige Fördermedium in den Druckraum 11 eingeleitet, wodurch die Flüssigkeit bis zu einem unteren Niveau N2 verdrängt wird. Dabei wird das Ventil 15 geschlossen und das Ventil 16 geöffnet, so daß die Flüssigkeit weiter in die Ableitung 12 eindringt, wobei eine gleiche Menge Flüssigkeit aus der Ableitung 12 in entsprechende Flüssigkeitsverbraucher bewegt wird. Nun wird das Ventil 5 geschlossen und das Ventil 17 geöffnet, wodurch das in dem Druckraum 11 befindliche gasförmige Fördermedium über die Entlüftungsleitung 19 entweicht. Nun öffnet das Ventil 15, so daß Flüssigkeit aus dem Behälter 9 in den Druckraum 11 nachströmen kann. Das Ventil 16 wird, in der gezeigten und beschriebenen Ausführungsform, aufgrund des Gewichts der Kugel des Ventils und der oberhalb der Kugel des Ventils 16 in der Ableitung 12 befindlichen Flüssigkeitsmenge geschlossen. Dieser Vorgang wird nun solange Förderung benötigt wird wiederholt.

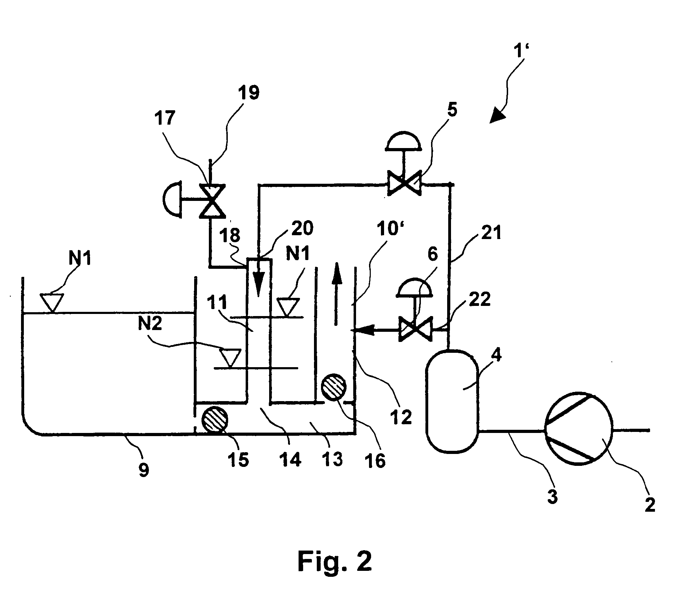

In dem in Fig. 2 gezeigten Ausführungsbeispiel weist die Anordnung 10' zusätzlich zu der in Fig. 1 gezeigten und beschriebenen Anordnung 10 eine Verbindung 22 zwischen der Ableitung 12 und dem Verdichter 2 für das gasförmige Fördermedium, im gezeigten Ausführungsbeispiel zwischen der Ableitung 12 und dem Druckbehälter 4 auf. In der Verbindung 22 ist ein weiteres Ventil 6 zur Steuerung der Einleitung des gasförmigen Fördermediums in die Ableitung 12 angeordnet, wobei die Verbindungsleitung 21 zwischen dem Druckbehälter 4 und dem Eintritt 20 des gasförmigen Fördermediums in den Druckraum 11, wie in dem in Fig. 1 gezeigten Ausführungsbeispiel, ein Ventil 5 zur Steuerung der Einleitung des gasförmige Fördermediums in den Druckraum 11 aufweist.

Auch in der in Fig. 2 gezeigten Anordnung 10' wird die Flüssigkeit in der Anordnung 10' durch das gasförmige Fördermedium mit einem Druck beaufschlagt, der zwischen zwei Druckniveaus abwechselnd so verändert wird, daß bei einem niedrigen Druckniveau die Flüssigkeit nachfließt und durch Anlegen des höheren Druckniveaus in die gewünschte Förderrichtung gefördert wird, wobei das Anlegen des höheren Druckniveaus zur Beaufschlagung der Flüssigkeit mit einem Überdruck mehr als einmal, im beschriebenen Ausführungsbeispiel zweimal, in kurzen Abständen erfolgt.

Die Förderung von Flüssigkeiten wird in dem in Fig. 2 gezeigten Ausführungsbeispiel wie folgt ausgeführt:

Die Ventile 5, 6, 16 und 17 sind anfänglich geschlossen, das Ventil 8 ist geöffnet. Die Flüssigkeit erstreckt sich aufgrund der leitenden Verbindung zwischen dem Behälter 9 und dem Druckraum 11, wobei auch in diesem Ausführungsbeispiel die Verbindung mit dem Behälter 9 unter dessen Flüssigkeitsniveau N1 angeordnet ist, in beiden Behältern bis zu dem Flüssigkeitsniveau N1. Durch Öffnen des Ventils 5 wird das unter einem Überdruck stehende gasförmige Fördermedium in den Druckraum 11 eingeleitet, wodurch die Flüssigkeit bis zu dem unteren Flüssigkeitsniveau N2 verdrängt wird. Dabei wird das Ventil 15 geschlossen und das Ventil 16 geöffnet, so daß die Flüssigkeit weiter in die Ableitung 12 eindringt, wobei eine gleiche Menge Flüssigkeit aus der Ableitung 12 zu entsprechenden Verbrauchern bewegt wird. Nun wird das Ventil 5 geschlossen und das weitere Ventil 6 zur Steuerung der Einleitung des gasförmigen Fördermediums in die Ableitung 12 geöffnet - oder es wird, in umgekehrter Reihenfolge, zuerst das weitere Ventil 6 zur Steuerung der Einleitung des gasförmigen Fördermediums in die Ableitung 12 geöffnet und dann das Ventil 5 geschlossen -, wodurch in beiden Fällen das gasförmige Fördermedium in die Ableitung 12 geleitet wird und das zweite Anlegen des höheren Druckniveaus zur Beaufschlagung der Flüssigkeit mit einem Überdruck erfolgt, wodurch ein Nachdrücken der in der Ableitung 12 befindlichen Flüssigkeit bewirkt wird, so daß nochmals Flüssigkeit zu entsprechenden Verbrauchern bewegt wird. Das Ventil 16 wird geschlossen. Nun wird auch das Ventil 6 geschlossen und das Ventil 17 geöffnet, wodurch das in dem Druckraum 11 befindliche gasförmige Fördermedium über die Entlüftungsleitung 19 entweicht. Nun öffnet das Ventil 15, so daß Flüssigkeit aus dem Behälter 9 in den Druckraum 11 nachströmen kann. Das Ventil 16 wird in Schließlage gehalten. Dieser Vorgang wird nun solange Förderung benötigt wird wiederholt.

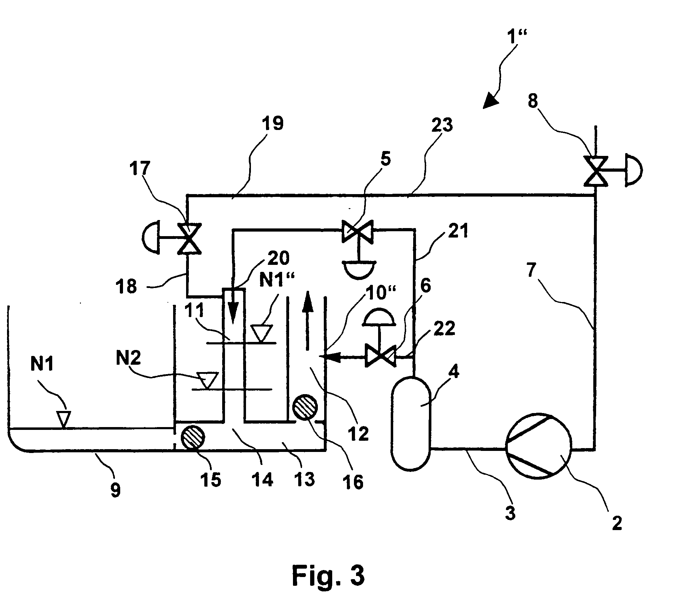

In dem in Fig. 3 gezeigten Ausführungsbeispiel weist die Anordnung 10" zusätzlich zu der in Fig. 2 gezeigten und beschriebenen Anordnung eine Verbindung 23 zwischen dem Druckraum 11 und einer Saugleitung 7 des Verdichters 2 auf, wobei die Saugleitung 7 des Verdichters 2 in Strömungsrichtung des gasförmigen Fördermediums nach der Abzweigung für die Verbindung 23 mit dem Ventil 17 des weiteren mit einem Ventil 17 gesteuerten Eingangs 20 des Druckraumes 11 ein weiteres Ventil 8 zum Öffnen oder Schließen der Saugleitung 7 gegenüber der Umgebung aufweist.

Auch in der in Fig. 3 gezeigten Anordnung 10" wird die Flüssigkeit durch das gasförmige Fördermedium mit einem Druck beaufschlagt, der zwischen zwei Druckniveaus abwechselnd so verändert wird, daß bei einem niedrigen Druckniveau die Flüssigkeit nachfließt und durch Anlegen des höheren Druckniveaus in die gewünschte Förderrichtung gefördert wird, wobei aber in der in Fig. 3 gezeigten Anordnung 10" bei dem niedrigen Druckniveau, ein Unterdruck herrscht, so daß die Flüssigkeit angesaugt wird und wobei in der in Fig. 3 gezeigten Anordnung 10" beim Anlegen des höheren Druckniveaus ein Überdruck herrscht.

Alternativ zu der oben angeführten Verbindung mit einer Saugleitung 7 des Verdichters 2 ist es natürlich auch möglich den benötigten Unterdruck mit einem zusätzlichen Verdichter zu erzeugen und diesen an die Verbindung 23 anzuschließen.

Die Förderung von Flüssigkeiten wird in dem in Fig. 3 gezeigten Ausführungsbeispiel wie folgt ausgeführt:

Die Ventile 5, 6, 8 und 16 sind anfänglich geschlossen, die Ventile 15 und 17 sind geöffnet. In diesem Ausführungsbeispiel erstreckt sich die Flüssigkeit in dem Flüssigkeitsbehälter 9 auf das Flüssigkeitsniveau N1 und in dem Druckraum 11 aufgrund der weiter unten beschriebenen Saugfunktion des Unterdruckes auf das wesentlich höhere Flüssigkeitsniveau N1". Durch Schließen des Ventils 17 und gleichzeitiges Öffnen des Ventils 5 wird das unter einem Überdruck stehende gasförmige Fördermedium in den Druckraum 11 eingeleitet, wodurch die Flüssigkeit bis zu einem unteren Flüssigkeitsniveau N2 verdrängt wird. Dabei wird das Ventil 15 geschlossen und das Ventil 16 geöffnet, so daß die Flüssigkeit weiter in die Flüssigkeitsableitung 12 eindringt, wobei eine gleiche Menge Flüssigkeit aus der Flüssigkeitsableitung 12 zu entsprechenden Flüssigkeitsverbraucher bewegt wird. In etwa gleichzeitig mit dem Ventil 5 wird auch das Ventil 8 geöffnet, damit der Verdichter 2 Gas einsaugen kann und ein Druck- und Mengenausgleich des Gases erfolgt.

Wie zu dem in Fig. 2 gezeigten Ausführungsbeispiel gezeigt und beschrieben, kann, wenn gewünscht, auch bei diesem Ausführungbeispiel nun das Ventil 5 geschlossen und das weitere Ventil 6 zur Steuerung der Einleitung des gasförmigen Fördermediums in die Ableitung 12 geöffnet werden - oder es kann, in umgekehrter Reihenfolge, zuerst das weitere Ventil 6 zur Steuerung der Einleitung des gasförmigen Fördermediums in die Ableitung 12 geöffnet und dann das Ventil 5 geschlossen werden -, wodurch in beiden alternativen Programmschritten das gasförmige Fördermedium in die Ableitung 12 geleitet wird und das zweite Anlegen des höheren Druckniveaus zur Beaufschlagung der Flüssigkeit mit einem Überdruck erfolgt, wodurch ein Nachdrücken der in der Ableitung 12 befindlichen Flüssigkeit bewirkt wird, so daß nochmals Flüssigkeit zu entsprechenden Verbrauchern bewegt wird.

Das Ventil 16 wird geschlossen. Nun werden auch das Ventil 6 und das Ventil 8 geschlossen und das Ventil 17 geöffnet, wodurch das in dem Druckraum 11 befindliche gasförmige Fördermedium über die Entlüftungsleitung 19 und die Saugleitung 7 zum Verdichter 2 geleitet wird und ein Unterdruck in der Druckkammer 11 entsteht. Durch den Unterdruck oder, für den Fall, daß das Ventil 15 kein Rückschlagventil ist, durch Fremdsteuerung öffnet sich nun das Ventil 15, so daß Flüssigkeit durch den in der Druckkammer 11 herrschenden Unterdruck aus dem Behälter 9 in den Druckraum 11 eingesaugt wird. Das Ventil 16 wird in Schließlage gehalten. Nun wird das Ventil 17 geschlossen und gleichzeitig wird das Ventil 8 wieder geöffnet. Dieser Vorgang wird nun solange Förderung benötigt wird wiederholt.

Bei geeignet gewählten Querschnitten und Leitungslängen, kann anstelle des Ventils 8 auch eine Rohrverengung, wie z. B. eine Blende, vorgesehen oder aber ein solches Ventil verwendet werden, das anstelle des gänzlichen Schließens und des Öffnens lediglich gedrosselt oder weiter geöffnet wird.

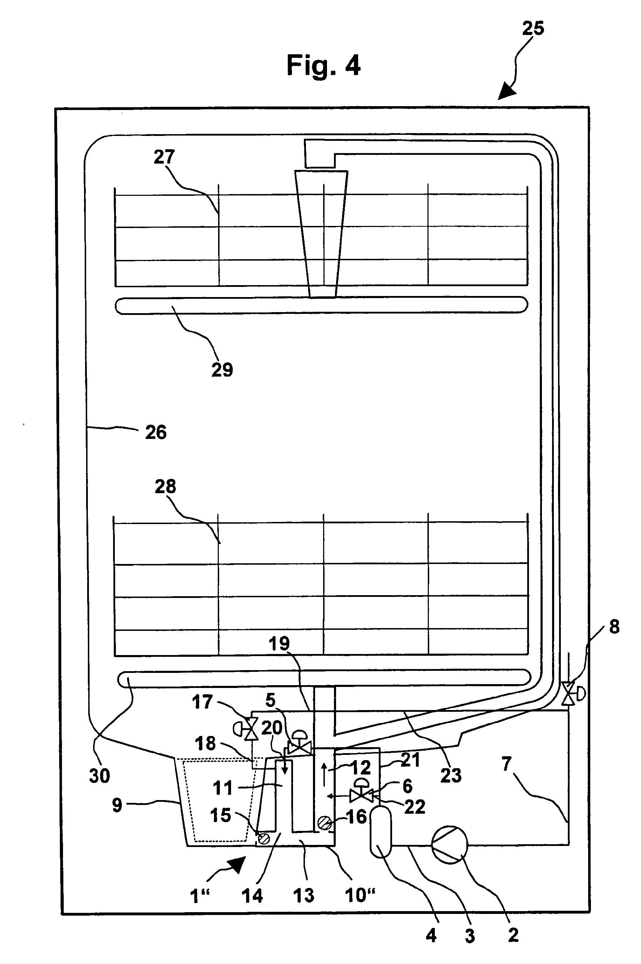

In Fig. 4 wird eine Geschirrspülmaschine 25, im gezeigten Ausführungsbeispiel eine Haushalt-Geschirrspülmaschine gezeigt, in der das erfindungsgemäße Verfahren zur Förderung von Reinigungsflüssigkeit mit einer Vorrichtung 1" des in der Fig. 3 gezeigten und beschriebenen Ausführungsbeispiel durchgeführt wird. Bei dieser und beschriebenen, Ausführungsbeispiel durchgeführt wird. Bei dieser Anwendung des erfindungsgemäßen Verfahrens in der Vorrichtung 1" ist das gasförmige Fördermedium vorteilhaft Luft und die zu fördernde Flüssigkeit eine Reinigungsflüssigkeit, mit der in der Geschirrspülmaschine 25 zu reinigendes Gut beaufschlagt wird, nämlich Wasser, das ggf. mit Reinigungs- oder Klarspülmitteln vermischt und ggf. auch mit abgetragenen Speiseresten verschmutzt ist.

Der Behälter 9 der Vorrichtung 1" wird bei der Geschirrspülmaschine 25 von dem untersten Abschnitt eines Spülbehälters 26 gebildet, der üblicherweise Pumpentopf oder Ablaufwanne genannt wird und in dem sich die von dem in Geschirrkörben 27, 28 eingefüllten, nicht gezeigten zu reinigendem Gut, z. B. Besteck, Teller, Tassen, Gläser usw., zurücklaufenden Reinigungsflüssigkeit sammelt. Das zu reinigende Gut wird mit der Reinigungsflüssigkeit durch Sprüheinrichtungen, z. B. sogenannten Sprüharmen 29, 30, beaufschlagt. Die Reinigungsflüssigkeit wird in der in Fig. 4 gezeigten und beschriebenen Anordnung mittels der Vorrichtung 1", wie zu Fig. 4 beschrieben, in die mit den Zuleitungen zu den Sprüharmen 29, 30 verbundene Ableitung 12 gefördert.

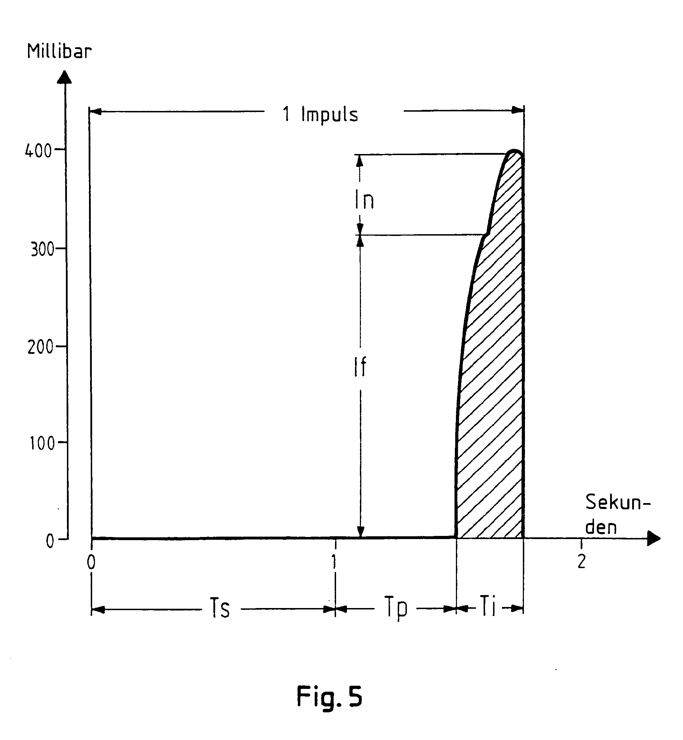

Der zeitlichen Verlauf eines mit dem zu den Fig. 3 und 4 gezeigten Ausführungsbeispielen geschilderten Verfahren erzeugten Sprühimpulses ist in Fig. 5 gezeigt, wobei die Figur den zeitlichen Ablauf und den erzeugten Wasserdruck ab dem Zeitpunkt des Öffnen des Ventils 17 zum Ansaugen der Reinigungsflüssigkeit in den Druckraum 11 zeigt. Der Zeitraum zum Ansaugen ist in Fig. 5 mit Ts bezeichnet und beträgt etwa eine Sekunde. In dem in Fig. 3 und 4 beschriebenen Ausführungsbeispiel wird nun über eine Zeitdauer Tp von etwa einer halben Sekunde eine Pause eingelegt. Nun folgt die impulsartige Förderung der Reinigungsflüssigkeit durch Öffnen des Ventils 5 mit einer Impulshöhe If von im Ausführungsbeispiel ca. 310 Millibar und das Nachdrücken durch Öffnen des Ventils 6 mit einer Impulshöhe In von im Ausführungsbeispiel zusätzlich ca. 90 Millibar zusammen über eine Zeitdauer Ti von im Ausführungsbeispiel einer halben Sekunde. In dem beschriebenen Ausführungsbeispiel ist also das Verhältnis der Dauer des zeitlichen Abstandes (Ts + Tp) der Förderungen der Reinigungsflüssigkeit zu der Dauer der Förderung der Reinigungsflüssigkeit Ti in etwa 3:1. Mit dieser sehr kurzen Impulsdauer Ti wird die Reinigungswirkung der unter Druck auf das zu reinigende Gut aufgebrachten Reinigungsflüssigkeit optimiert.

Bei einer Beaufschlagung des zu reinigenden Gutes im zeitlichen Abstand wie in den zu Fig. 1 und 2 beschriebenen Ausführungsbeispielen erfolgt bei jedem Beginn der Beaufschlagung ein Druckanstieg in der beaufschlagenden Reinigungsflüssigkeit sowie bei jedem Ende der Beaufschlagung ein Abfall des Druckes in der beaufschlagenden Reinigungsflüssigkeit. In der Praxis hat sich gezeigt, daß durch das abwechselnde Ansteigen und Abfallen des Druckes der Reinigungsflüssigkeit und das damit verursachte abwechselnde Ansteigen und Abfallen der auf die Verschmutzungen auf dem zu reinigenden Gut wirkenden mechanischen Kräfte, ein ausreichendes Reinigungsergebnis bei einer kurzen Dauer der Beaufschlagung erreicht wird, insbesondere wenn die Förderung der Reinigungsflüssigkeit impulsartig, wie bei das zu den Figuren 3 und 4 beschriebenen Ausführungsbeispiel, erfolgt, wobei das abwechselnde Ansteigen und Abfallen des Druckes der Reinigungsflüssigkeit und das damit verursachte abwechselnde Ansteigen und Abfallen der auf die Verschmutzungen auf dem zu reinigenden Gut wirkenden mechanischen Kräfte in sehr kurzer Zeitdauer und damit sehr intensiv stattfindet.

Mit der Erfindung ist ein Verfahren zur Förderung von Reinigungsflüssigkeiten geschaffen, zu dessen Anwendung keine besonderen Zulaufvoraussetzungen eingehalten werden müssen.

Mit der Erfindung ist ein Verfahren zur Förderung von Reinigungsflüssigkeiten in einer Geschirrspülmaschine geschaffen, bei dem in vorteilhafterweise auf eine Pumpe verzichtet wird.

## Patentansprüche

1. Verfahren zur wiederholten Förderung von Reinigungsflüssigkeit aus einer in einer Geschirrspülmaschine angeordneten Ablaufwanne, in der sich die von zu reinigenden Gut zurücklaufende Reinigungsflüssigkeit sammelt und zu einer Sprühvorrichtung befördert wird, **dadurch gekennzeichnet, dass** die Reinigungsflüssigkeit durch ein gasförmiges Fördermedium mit einem Druck beaufschlagt wird, der zwischen zwei Druckniveaus abwechselnd so verändert wird, dass bei einem niedrigen Druckniveau die Reinigungsflüssigkeit nachfließt und durch Anlegen des höheren Druckniveaus in die gewünschte Förderrichtung gefördert wird.

2. Verfahren nach Anspruch 1, **dadurch gekennzeichnet, dass** die Reinigungsflüssigkeit durch das gasförmige Fördermedium mit einem Druck beaufschlagt wird, der zwischen zwei Druckniveaus abwechselnd so verändert wird, dass bei einem niedrigen Druckniveau, bei dem ein Unterdruck herrscht, die Reinigungsflüssigkeit angesaugt und durch Anlegen des höheren Druckniveaus, bei dem ein Überdruck herrscht, in die gewünschte Förderrichtung gefördert wird.

3. Verfahren nach Anspruch 1 oder 2, **dadurch gekennzeichnet, dass** das gasförmige Fördermedium Luft ist.

4. Verfahren nach einem der Ansprüche 1 bis 3, **dadurch gekennzeichnet, dass** die Reinigungsflüssigkeit aus Gasen, Flüssigkeiten und/oder Gemischen derselben ausgebildet ist.

## Claims

1. Method for repeated conveying of cleaning liquid from a drain sump, which is arranged in a dishwasher and in which the cleaning liquid running back from the stock to be cleaned collects and is conveyed to a spray device, **characterised in that** the cleaning liquid is loaded by a gaseous conveying medium at a pressure which is so varied between two pressure levels in alternation that at a low pressure level the cleaning liquid flows on and through application of the higher pressure level is conveyed in the desired conveying direction.

2. Method according to claim 1, **characterised in that** the cleaning liquid is loaded by the gaseous conveying medium at a pressure which is so varied between two pressure levels in alternation that in the case of a low pressure level at which an underpressure prevails the cleaning liquid is sucked up and through application of the higher pressure level at which an excess pressure prevails the cleaning liquid is conveyed in the desired conveying direction.

3. Method according to claim 1 or 2, **characterised in that** the gaseous conveying medium is air.

4. Method according to one of claims 1 to 3, **characterised in that** the cleaning liquid is formed from gases, liquids and/or mixtures of the same.

## Revendications

1. Procédé de transport répété de liquide de lavage hors d'une cuve d'écoulement disposée dans un lave-vaisselle, dans laquelle le liquide de lavage revenant de produits à laver s'accumule et est transporté vers un dispositif d'arrosage, **caractérisé en ce que** le liquide de lavage est alimenté au moyen d'un fluide gazeux véhiculé avec une pression qui est variée en alternance entre deux niveaux de pression, de telle manière qu'en cas d'un bas niveau de pression le liquide de lavage s'écoule et qu'en appliquant le niveau de pression plus élevé, il est transporté dans le sens de transport souhaité.

2. Procédé selon la revendication 1, **caractérisé en ce que** le liquide de lavage est alimenté au moyen du fluide gazeux véhiculé avec une pression qui est variée en alternance entre deux niveaux de pression, de telle manière qu'en cas d'un bas niveau de pression, dans lequel il y a une dépression, le liquide de lavage est aspiré et qu'en appliquant le niveau de pression plus élevé, dans lequel il y a une surpression, il est transporté dans le sens de transport souhaité.

3. Procédé selon la revendication 1 ou 2, **caractérisé en ce que** le fluide gazeux véhiculé est de l'air.

4. Procédé selon l'une quelconque des revendications 1 à 3, **caractérisé en ce que** le liquide de lavage est formé par des gaz, des liquides et/ou des mélanges de ceux-ci.
